(19)

Europäisches
Patentamt
European
Patent Office
Office européen
des brevets

(11)  EP 2 858 037 B1

(12)  **EUROPEAN PATENT SPECIFICATION**

(45) Date of publication and mention
of the grant of the patent:
**13.09.2017  Bulletin 2017/37**

(51) Int Cl.:
*G06T 7/215* <sup>(2017.01)</sup>   *G06T 7/254* <sup>(2017.01)</sup>
*G06T 7/194* <sup>(2017.01)</sup>

(21) Application number: **14155373.5**

(22) Date of filing: **17.02.2014**

(54) **Moving object detector**

Bewegtobjektdetektor

Détecteur d'objet en mouvement

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.10.2013  JP 2013207572**

(43) Date of publication of application:
**08.04.2015  Bulletin 2015/15**

(73) Proprietor: **Toshiba Alpine Automotive
Technology Corporation
Iwaki- shi
Fukushima
970-1144 (JP)**

(72) Inventor: **Furukawa, Kenji
Iwaki-Shi, Fukushima 970-1144 (JP)**

(74) Representative: **Moreland, David et al
Marks & Clerk LLP
Aurora
120 Bothwell Street
Glasgow G2 7JS (GB)**

(56) References cited:
**EP-A1- 1 197 937    US-B1- 8 284 258**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD

An embodiment described herein relate generally to a moving object detector that accurately estimates a motion trajectory of a moving object existing at a close distance therefrom.

BACKGROUND

Various human monitoring systems realized using a camera, such as a monitoring system for security purpose, an on-vehicle monitoring system for safety purpose, and a monitoring system for vending machine, have been proposed.

In order for such a system to perform various processing in accordance with to motion of an object to be monitored, accurate estimation of a motion trajectory is essential.

The monitoring system for security purpose is often used in a scene where a sufficient distance is provided between an object to be monitored and a camera. In such a case, an angle of view is narrow, and an image having a little distortion can be used, allowing accurate estimation of the motion trajectory.

On the other hand, the on-vehicle monitoring system for safety purpose or monitoring system for vending machine is used in a scene where an object to be monitored is positioned at a close distance from the camera, a fish-eye lens is required to cover an angle of view. The use of the fish-eye lens increases distortion such as projection plane displacement, making it difficult to achieve accurate estimation of the motion trajectory.

US8284258 discloses determining motion trajectories in wide angle imaging systems.

EP1197937A discloses the creation of panoramic and bird's eye views from a vehicle-mounted omnidirectional imager.

The invention is in the detector of claim 1.

BRIEF DESCRIPTION OF THE DRAWINGS

FIG. 1 is a view illustrating an example of a moving object detector according to an embodiment of the present invention;
FIG. 2 is a view illustrating an example of an image processing device;
FIG. 3A is a view for explaining generation of an top view image, and FIG. 3B is a view for explaining generation of a cylindrical image;
FIG. 4 is a flowchart illustrating a flow of generation processing of a background difference;
FIG. 5 is a flowchart illustrating a flow of estimation processing of an approaching direction;
FIG. 6 is a flowchart illustrating a flow of estimation processing of a motion trajectory;
FIGS. 7A and 7B are graphs each explaining two-stage binarization processing; and
FIGS. 8A to 8M are views each illustrating an example of a processed image.

DETAILED DESCRIPTION

According to one embodiment, a moving object detector includes an image input device that captures a moving object existing at a close distance to acquire image information of the moving object; and an image processing device that applies arithmetic processing to the image information to generate a cylindrical binary image and a top view binary image, extracts a region of the moving object by background correlation, estimates an approaching direction of the moving object from the cylindrical binary image, and estimates a motion trajectory of the moving object based on the approaching direction and the top view binary image.

An embodiment of the present invention will be described with reference to the drawings. Throughout the drawings, the same reference numerals are used to designate the same or similar components, and redundant descriptions thereof are omitted.

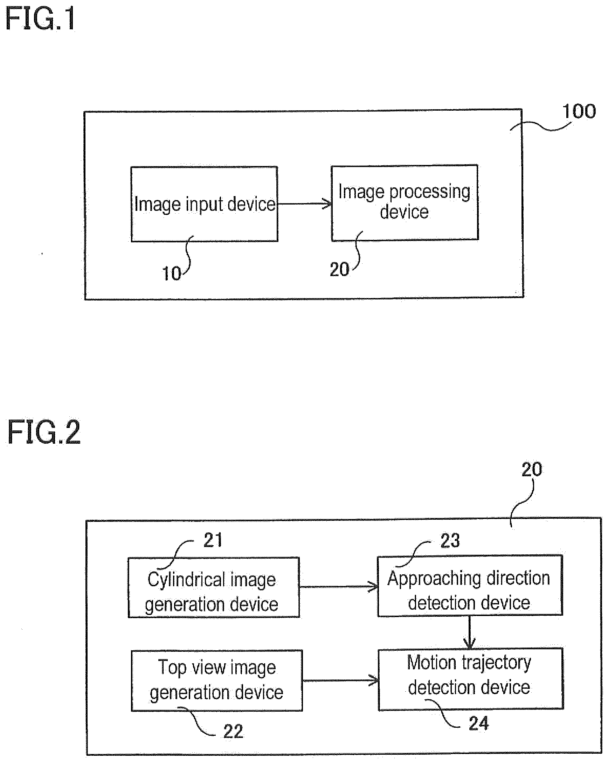

FIG. 1 is a view illustrating a configuration example of a moving object detector according to the embodiment of the present invention. As illustrated in FIG. 1, a moving object detector 100 mainly includes an image input device 10 and an image processing device 20. The image input device 10 captures an image of a person to be detected existing at a close distance therefrom and is preferably a wide-angle camera and, more preferably, a fish-eye camera which is a super wide-angle camera.

The image processing device 20 applies arithmetic processing to image information acquired by the image input device 10 to thereby estimate a motion trajectory of the person. The image processing device 20 can be realized by, e.g., a CPU.

FIG. 2 is a view illustrating a configuration example of the image processing device 20. As illustrated in FIG. 2, the image processing device 20 can be mainly constituted by a cylindrical image generation device 21, an top view image generation device 22, an approaching direction detection device 23, and a motion trajectory detection device 24. The cylindrical image generation device 21 generates a cylindrical binary image from the image information acquired by the image input device 10. Details of the generation of the cylindrical binary image will be described later. The top view image generation device 22 generates a top view binary image from the image information acquired by the image input device 10. Details of the generation of the top view binary image will be described later. The approaching direction detection device 23 detects an approaching direction from the cylindrical binary image. The motion trajectory detection device 24 estimates a motion trajectory from the approaching direction and top view binary image.

Details of the moving object detector 100 having the above configuration will be described.

In the present embodiment, estimation of the motion trajectory is performed as follows: an input image is converted into the cylindrical image and top view; a region of a moving object existing at a close distance is extracted from image plane of both the cylindrical and top view images by background correlation; the approaching direction of the moving object is estimated from the cylindrical binary image; and the motion trajectory is estimated from the approaching direction and top view binary image.

<Generation of Cylindrical Image>

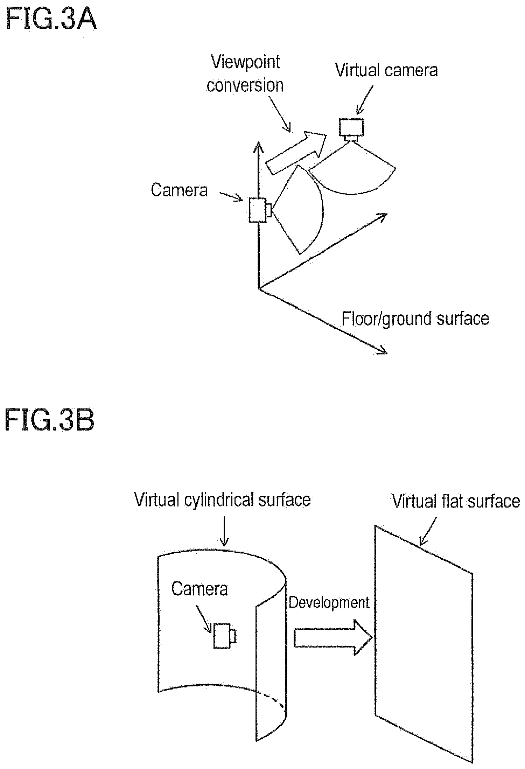

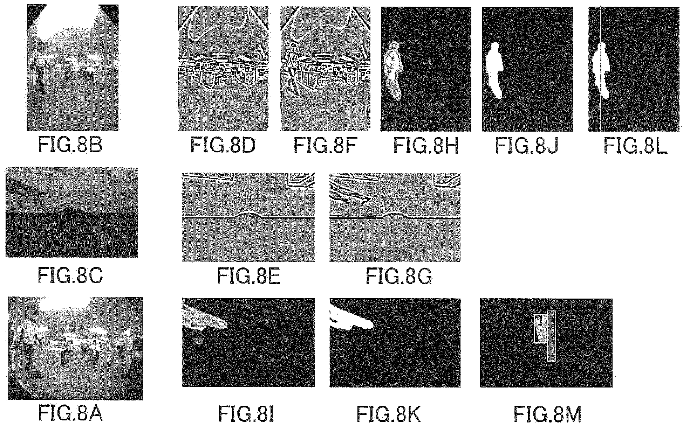

The cylindrical image is an image obtained by developing, on a virtual flat surface, the image information obtained by capturing an object existing on a virtual cylindrical surface with the image input section 10 (e.g., fish-eye camera). FIG. 3B is a view for explaining the generation of the cylindrical image. The generation of the cylindrical image is described in detail in, e.g., Japanese Patent Application Laid-Open Publication No. 2010-217984 and is thus not described in detail herein. FIG. 8B illustrates an example of the cylindrical image which is generated from an input image of FIG. 8A by coordinate conversion. A size of the cylindrical image to be generated needs to be determined depending on a field angle of a camera to be used, a resolution of a sensor to be used, and the like. In the present embodiment, the size of the cylindrical image is assumed to be 128×168.

<Generation of Top view image>

In the present embodiment, an image obtained by capturing, with a virtual camera disposed at a given spatial position, an image of a region right therebelow is used as the top view image. Specifically, the image information obtained by image capturing with the image input section 10 (e.g., fish-eye camera) is subjected to viewpoint conversion (top view conversion). FIG. 3A is a view for explaining the generation of the top view image. The generation of the top view image is described in detail in, e.g., Japanese Patent Application Laid-Open Publication No. 2012-141972 and is thus not described in detail herein. FIG. 8C illustrates an example of the top view image which is generated from an input image of FIG. 8A by coordinate conversion. A size of the top view image to be generated needs to be determined depending on a field angle of a camera to be used, a resolution of a sensor to be used, and the like. In the present embodiment, the size of the cylindrical image is assumed to be 180×120.

<Extraction of Moving Object Region>

In the present embodiment, the following processing are performed for the cylindrical image and top view image independently of one another to generate the cylindrical binary image and top view binary image: (1) generation of a peripheral difference image (edge image); (2) generation of a background correlation image from a current frame and a background image; and (3) extraction of only the moving object using a two-stage Otsu's binarization method.

A background difference refers to an operation of comparing an acquired observation image and a previously acquired background image and subtracting the background image from the observation image to cut out a foreground image, that is, an operation of extracting an object that does not exist in the background image. A region occupied by the object that does not exist in the background image is referred to as a foreground region, and a remaining region is referred to as a background region. FIG. 8D is an example of a cylindrical background image, and FIG. 8E is an example of a top view background image.

In the present embodiment, a person existing at a close distance with respect to a still background image is grasped as a moving object.

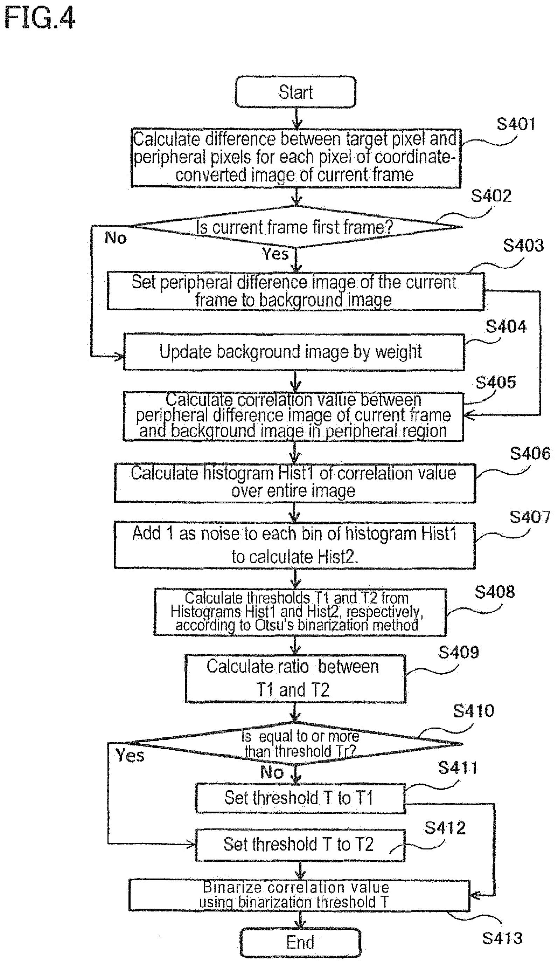

FIG. 4 is a flowchart illustrating a flow of generation processing of the background difference.

First, a difference between a target pixel and its peripheral pixels is calculated for each pixel of coordinate-converted image of current frame according to the following expression (step S401).

$$I_{differ}(x,y) = I(x,y) - \frac{1}{N}\sum I(x,y) \quad \cdots (1)$$

where Idiffer(x,y) denotes the difference value from peripheral region, I(x,y) denotes the target pixel, N is a size of peripheral region and has preferably size of about 9x9 pixels.

FIG. 8F is an example of the cylindrical image of the current frame which is generated from the coordinate-converted image of FIG. 8B. FIG. 8G is an example of the top view image of the current frame which is generated from the coordinate-converted image of FIG. 8C. As is clear from FIGS. 8F and 8G, the difference from the peripheral region is obtained by enhancing only a texture component of a scene and, thus, it is possible to suppress false detection due to a variation (offset component) in the entire luminance occurring in association with camera's automatic exposure control or degradation of positional accuracy due to shadow of a foot region to be detected. The coordinate-converted image is obtained by coordinate-converting the image information over the entire pixels acquired by the image input section 10 according to a previously prepared predetermined conversion table.

Next, it is determined whether or not the current frame is a first frame (step S402).

When it is determined that the current frame is a first frame (Yes in step S402), the peripheral difference image of the current frame is set to the background image (step S403), and the flow shifts to step S405.

On the other hand, when it is determined that the current frame is not the first frame (No in step S402), the background image Iback(x,y) is updated by a weight $\alpha$ as represented in the following expression (2) (step S404).

$$I_{back}(x,y) = \alpha \cdot I'_{back}(x,y) + (1-\alpha) \cdot I_{differ}(x,y) \cdots (2)$$

where I'back(x,y) denotes a background image of a previous frame.

The background image is dynamically learned by the above processing. Here, the smaller a value of $\alpha$ is, the greater influence of the current frame image becomes to enhance resistance to noise occurring between frames, whereas sensitivity to the moving object as the foreground image becomes worse (difference becomes small). On the other hand, the larger the value of $\alpha$ is, the easier the difference is to perceive, whereas the more likely information of a person who has passed in front of the camera remains, which may cause false detection. Preferably, the value of $\alpha$ is set to 0.5 to 0.03.

Then, a correlation value Icorr(x,y) (SSD: Sum of Squared Difference) between the peripheral difference image of current frame and background image in a peripheral region S is calculated according to the following expression (3) (step S405).

$$I_{corr}(x,y) = \frac{1}{S}\sum \left| I_{differ}(x,y) - I_{back}(x,y) \right|^2 \quad \cdots (3)$$

Spike noise is suppressed by the above processing. Here, S is a rectangular region around a target pixel and has preferably a size of about $7\times 7$ pixels. FIG. 8H is an example of a cylindrical correlation image. FIG. 8I is an example of a top view-correlation image. In FIGS. 8H and 8I, a brighter region has a larger difference from the background image.

Subsequently, a histogram Hist1 of the correlation values is calculated over the entire image (step S406). When no person exists, application of the Otsu's binarization method to this histogram may set an unreasonably low threshold for extracting background noise.

Then, 1 is added as noise to each bin of the histogram Hist1 to calculate a histogram Hist2 (step S407). The value to be added is not limited to "1", and a larger value than 1 may be effective depending on a form of the background noise. This processing allows improvement of the threshold that has been set to an unreasonably low value due to absence of the person on the image.

Subsequently, thresholds T1 and T2 are calculated from the Histograms Hist1 and Hist2, respectively, according to the Otsu's binarization method (step S408). As a method of automatically calculating a threshold for binarization of a gray scale image, there is known a method based on a discriminant analysis method, called Otsu's binarization method. The Otsu's binarization method assumes that a histogram of a gray scale image has two peaks corresponding respectively to a target object (person, in the present embodiment) and a background (noise component in the correlation image) and calculates a threshold at which a separablity between two classes of the target object and background in the image becomes highest. an intra-class variance and an inter-class variance are calculated for each value as a threshold, and a value at which a ratio between the intra-class variance and the inter-class variance becomes minimum is set as a threshold.

Then, a ratio R (= T2/T1) between T1 and T2 is calculated (step S409).

Subsequently, it is determined whether or not the ratio R is equal to or more than a threshold Tr (step S410).

When it is determined that the ratio R is not equal to or more than the threshold Tr (No in step S410), a binarization threshold T is set to T1 (step S411). When it is determined that the ratio R is equal to or more than the threshold Tr (Yes in step S410), a binarization threshold T is set to T2 (step S412). Although the Otsu's binarization method is not suitable for an image having no clear bimodal distribution, the above processing reduces adverse effect caused by the Otsu's binarization method, that is, it is possible to prevent a low threshold from being automatically generated.

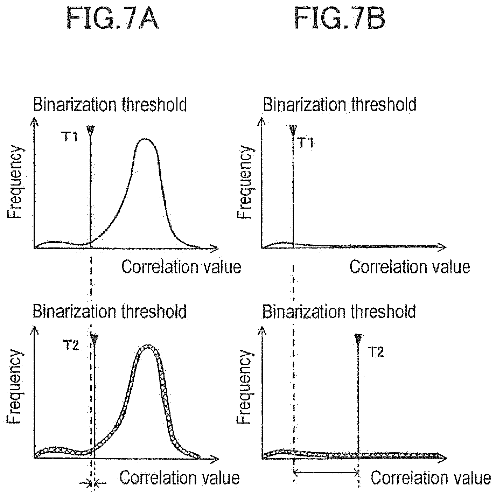

FIGS. 7A and 7B are views each explaining the two-stage Otsu's binarization method. FIG. 7A illustrates a case where T1 is used as the binarization threshold. As illustrated in FIG. 7A, even in a case where a noise component is added, similar binarization effect can be obtained irrespective of whether T1 or T2 is used. FIG. 7B illustrates a case where T2 is used as the binarization threshold. It can be determined from FIG. 7B that T1 reacts to the noise. That is, the binarization effect significantly differs between T1 and T2.

Then, the correlation value is binarized using the binarization threshold T (step S413), and the background difference generation processing is ended. FIG. 8J is an example of a cylindrical binary image. FIG. 8K is an example of a top view binary image.

<Estimation of Approaching Direction>

In the present embodiment, the following processing are performed to estimate the approaching direction of the moving object from the cylindrical binary image: (1) projection of the cylindrical binary image in a y-direction to calculate center of gravity of a moving object (2) calculation of an approaching direction of a person from the center of gravity coordinates.

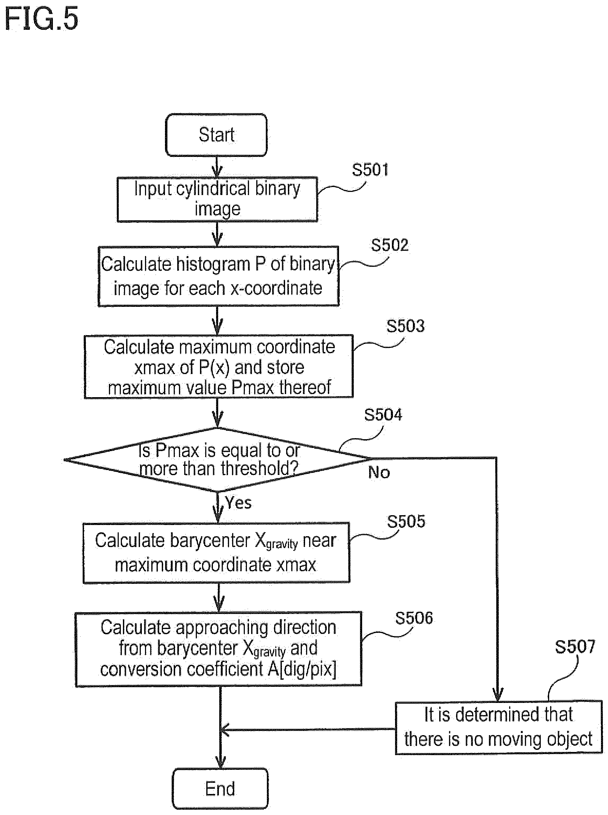

FIG. 5 is a flowchart illustrating a flow of estimation processing of the approaching direction.

First, the cylindrical binary image is input (step S501).

Then, a histogram P(x) of the binary image is calculated for each x-coordinate of the image (step S502).

Then, a maximum coordinate xmax of a histogram P(x) is calculated, and a maximum value Pmax thereof is stored (step S503).

Then, it is determined whether or not the maximum value Pmax of the histogram is equal to or more than a threshold (step S504). That is, it is determined in this processing that there is no moving object when a ratio of the maximum histogram projected in the y-direction relative to a height of the image is equal to or less than a predetermined value, whereby false detection is suppressed. The threshold is preferably set to a value obtained by multiplying the image height by a predetermined coefficient (e.g., 0.2).

When it is determined that the maximum value Pmax of the histogram is equal to or more than the threshold (Yes in step S504), a barycenter $X_{gravity}$ is calculated according to the following expression (4) near the maximum coordinate xmax (step S505). FIG. 8L is an example of an image representing the center of gravity position with a white vertical line.

$$x_{gravity} = \sum \left( x \cdot P(x) \right) \Big/ \sum P(x) \quad \cdots (4)$$

Then, the barycenter $X_{gravity}$ and a conversion coefficient A[deg/pix] are multiplied to calculate an approaching direction θ of the moving object (person) (step S506), and the estimation processing of the approaching direction is ended. The conversion coefficient A is calculated based on a relationship between a horizontal angle of view [deg] of a camera to be used and a width [pix] of the generated cylindrical image.

On the other hand, when it is determined that the maximum value Pmax of the histogram is not equal to or more than the threshold (No in step S504), it is determined that there is no moving object (person) (step S507), and the estimation processing of the approaching direction is ended.

<Detection of Motion trajectory>

In the present embodiment, the following processing are performed to estimate the motion trajectory from the approaching direction and top view binary image: (1) rotation of the top view binary image using the approaching direction calculated on the cylindrical image and correction of the rotation of the top view binary image such that the moving object always faces the front; (2) labeling of the rotation-corrected top view binary image to calculate a foot candidate region; (3) estimation of a distance from a foot region by a weighted mean of an area of the foot candidate region; and (4) calculation of a foot position for each frame based on the approaching direction and distance from the foot region.

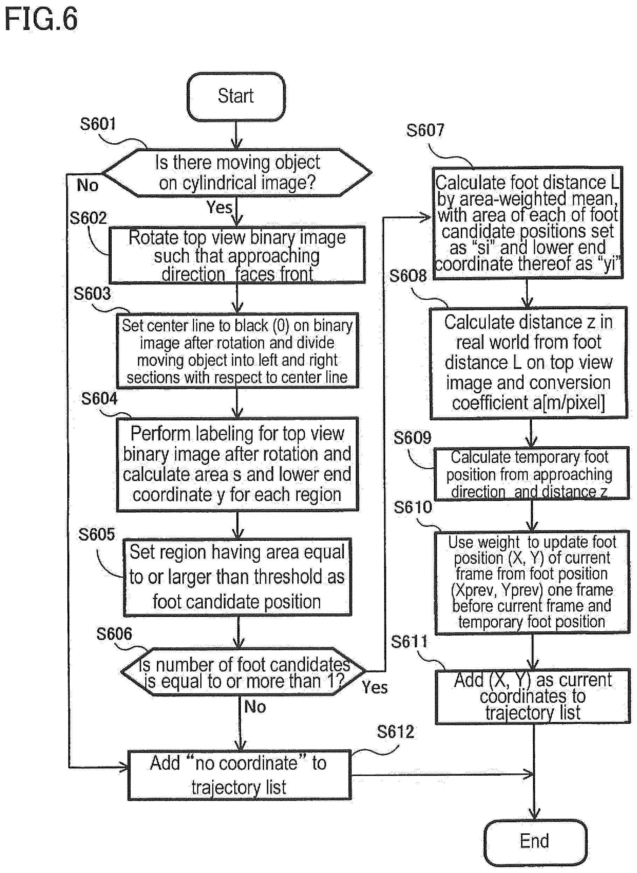

FIG. 6 is a flowchart illustrating a flow of estimation processing of the motion trajectory.

First, it is determined whether or not the moving object exists on the cylindrical image (step S601).

When it is determined that the moving object exists on the cylindrical image (Yes in step S601), the top view binary image is rotated such that the approaching direction θ faces the front (step S602). This allows the moving object (person) to face an observer.

Then, a center line is set to black (0) on the binary image after rotation, and the moving object is divided into left and right sections with respect to the center line (step S603).

Then, labeling is performed for the top view binary image after rotation, and an area s and a lower end coordinate y for each region are calculated (step S604). The labeling is processing of assigning the same number (label) to successive white (or black) pixels in an image that has been subjected to binarization and classifying a plurality of regions into a group. Here, the foot candidate region is calculated by acquiring area information of each region. FIG. 8M is an example of an image after rotation and labeling.

Then, a region having an area equal to or more than a threshold is set as a foot candidate position (step S605). This processing is for removing noise and determining a case where the moving object (person) does not exist around the foot of the camera installation location. The threshold to be used here is set depending on a size of the noise to be removed and is preferably about 50.

Then, it is determined whether or not the number of the foot candidates is equal to or more than 1 (step S606).

When it is determined that the number of the foot candidates is equal to or more than 1 (Yes in step S606), a foot distance L on the top view image is calculated by an area-weighted mean, with an area of each of the ith foot candidate positions set as "si" and a lower end coordinate thereof as "yi" (step S607). The foot distance L can be calculated according to the following expression (5).

$$L = \sum (s_i \cdot y_i) \big/ \sum s_i \quad \cdots (5)$$

Then, a distance z in the real world is calculated from the foot distance L on the top view image and a conversion coefficient a[m/pixel] (step S608). The distance z can be calculated according to the following expression (6).

$$z = a \times L \cdots (6)$$

As the conversion coefficient a, a metric size of one pixel of the generated top view image in a real plane is previously calculated.

Subsequently, a temporary foot position (Xtemp, Ytemp) is calculated from the approaching direction θ and distance z according to the following expression (7) (step S609).

$$x_{temp} = z \cdot \cos \theta, \; y_{temp} = z \cdot \sin \theta \quad \cdots (7)$$

Then, a weight β is used to update a foot position (X, Y) of the current frame from a foot position (Xprev, Yprev) one frame before the current frame and temporary foot position (Xtemp, Ytemp) according to the following expressions (8) and (9) (step S610). The weight β is a coefficient defined by considering accuracy of the foot position calculated in the current frame. When a value of β is reduced, resistance to the noise increases, whereas a time delay occurs. When a value of β is increased, sensitively to the noise increases, whereas the latest information can be obtained. The value of β is preferably about 0.3.

$$X = \beta \cdot X_{temp} + (1 - \beta) \cdot X_{prev} \quad \cdots (8)$$

$$Y = \beta \cdot Y_{temp} + (1 - \beta) \cdot Y_{prev} \quad \cdots (9)$$

Then, obtained (X, Y) is added as current coordinates to a trajectory list (step S611), and the estimation processing of the motion trajectory is ended.

On the other hand, when "No" (moving object does not exist on the cylindrical image) is determined in step S601 and when "No" (there is no foot candidate) is determined in step S606, information indicating "no coordinate" is added to the trajectory list (step S612), and the estimation processing of the motion trajectory is ended.

According to the present embodiment, it is possible to accurately estimate the motion trajectory of a moving object (e.g., person) existing at a close distance.

Although the embodiment of the invention has been described above, it is just an example and should not be construed as restricting the scope of the invention. This novel embodiment may be practiced in various other forms, and part of it may be omitted, replaced by other elements, or changed in various manners without departing from the scope of the invention as claimed.

**Claims**

1. A moving object detector (100) comprising:

   an image input device (10) configured to capture a moving object existing at a close distance to acquire image information of the moving object; and
   an image processing device (20) configured to apply arithmetic processing to the image information to generate a cylindrical binary image and a top view binary image, by extracting, from each of a cylindrical image and a top view image derived from the image information, a respective region of the moving object by background correlation; to estimate an approaching direction of the moving object from the cylindrical binary image; and to estimate a motion trajectory of the moving object based on the approaching direction and the top view binary image.

2. The detector according to claim 1, wherein
   the image processing device (20) includes:

   a cylindrical binary image generator (21) configured to generate a cylindrical image from the image information acquired by the image input device (10) and to generate a cylindrical binary image based on the cylindrical image;
   a top view binary image generator (22) configured to generate to a top view image from the image information acquired by the image input device (10) and to generate a top view binary image based on the top view image;
   an approaching direction detector (23) configured to detect the approaching direction from the cylindrical binary image; and
   a motion trajectory estimator (24) configured to estimate the motion trajectory from the approaching direction and top view binary image.

3. The detector according to either of claims 1 and 2, wherein the image input device (10) is a fish-eye camera.

4. The detector according to either of claims 2 and 3, configured to generate the cylindrical image by developing, on a virtual flat surface, the image information obtained by capturing an object existing on a virtual cylindrical surface with the image input device (10).

5. The detector according to any one of claims 2 to 4, configured to generate the top view image by applying view point conversion to the image information acquired by the image input device (10).

6. The detector according to claim 2, wherein the image processing device (20) is configured to generate the cylindrical binary image and the top view binary image, by the generation of a difference image from a background based on background correlation using an edge image and extraction of only a moving object region using a two-stage Otsu's binarization method considering a noise component, to the cylindrical image and top view image independently of each other.

7. The detector according to claim 2, wherein the image processing device (20) is configured to estimate the approaching direction of the moving object by projection of the cylindrical binary image in a y-direction to calculate the center of gravity coordinates and calculation of the approaching direction of the moving object from the calculated center of gravity coordinates.

8. The detector according to claim 2, wherein the image processing device (20) is configured to estimate the motion trajectory by rotation of the top view binary image using the approaching direction and correction of the rotation of the top view binary image such that the moving object always faces a predetermined direction, labeling of the rotation-corrected top view binary image to calculate a foot candidate region, estimation of a distance from a foot region by a weighted mean of an area of the foot candidate region, and calculation of a foot position for each frame based on the approaching direction and distance from the foot region.

9. A system comprising:

an electronic equipment configured to be operated by a user; and
the moving object detector according to any preceding claim mounted on the electronic equipment.

10. The system according to claim 9, wherein the image input device (10) is configured to capture an image of the user.


**Patentansprüche**

1. Bewegtobjektdetektor (100), Folgendes beinhaltend:

ein Bildeingabegerät (10), konfiguriert zum Einfangen eines in einem kurzen Abstand vorhandenen Bewegtobjekts zur Erfassung von Informationen vom Bewegtobjekt; und
ein Bildverarbeitungsgerät (20), konfiguriert zur Anwendung arithmetischer Verarbeitung auf die Bildinformation zur Erzeugung eines binären, zylindrischen Bildes und eines binären Draufsicht-Bildes, durch Extrahieren, jeweils aus einem zylindrischen Bild und einem Draufsicht-Bild, welche aus der Bildinformation abgeleitet wurden, einer jeweiligen Region des Bewegtobjekts durch Hintergrund-Korrelation; Schätzen einer Annäherungsrichtung des Bewegtobjekts aus dem binären, zylindrischen Bild; und Schätzen einer Bewegungsbahn des Bewegtobjekts auf der Grundlage der Annäherungsrichtung und des binären Draufsicht-Bildes.

2. Detektor nach Anspruch 1, bei welchem das Bildverarbeitungsgerät (20) Folgendes einschließt:

einen Generator von binären, zylindrischen Bildern (21), konfiguriert zur Erzeugung eines zylindrischen Bildes aus der vom Bildeingabegerät (10) erfassten Bildinformation und zur Erzeugung eines binären, zylindrischen Bildes auf der Grundlage des zylindrischen Bildes;
einen Generator von binären Draufsicht-Bildern (22), konfiguriert zur Erzeugung eines Draufsicht-Bildes aus der vom Bildeingabegerät (10) erfassten Bildinformation und zur Erzeugung eines binären Draufsicht-Bildes auf der Grundlage des Draufsicht-Bildes;
einen Annährungsrichtungs-Detektor (23), konfiguriert zum Detektieren der Annährungsrichtung aus dem binären, zylindrischen Bild; und
ein Bewegungsbahn-Schätzgerät (24), konfiguriert zum Schätzen der Bewegungsbahn aus der Annährungsrichtung und dem binären Draufsicht-Bild.

3. Detektor nach einem der Ansprüche 1 und 2, bei welchem das Bildeingabegerät (10) eine Fischaugen-Kamera ist.

4. Detektor nach einem der Ansprüche 2 und 3, konfiguriert zur Erzeugung des zylindrischen Bildes durch Ausbreiten, auf einer virtuellen ebenen Fläche, der durch Einfangen eines auf einer virtuellen zylindrischen Fläche vorhandenen Objekts mit dem Bildeingabegerät (10) erzielten Bildinformation.

5. Detektor nach einem der Ansprüche 2 bis 4, konfiguriert zur Erzeugung des Draufsicht-Bildes durch Anwendung einer Blickpunktkonversion auf die vom Bildeingabegerät (10) erfasste Bildinformation.

6. Detektor nach Anspruch 2, bei welchem das Bildverarbeitungsgerät (20) konfiguriert ist zur Erzeugung des binären, zylindrischen Bildes und des binären Draufsicht-Bildes, durch die Erzeugung eines Differenzbildes aus einem Hintergrund auf der Grundlage von Hintergrund-Korrelation, unter Verwendung eines Kantenbildes und Extraktion von nur einer Bewegtobjektregion unter Verwendung eines Zwei-Stufen-Binärisierungsverfahrens nach Otsu unter Betrachtung einer Geräuschkomponente, jeweils unabhängig voneinander, zum zylindrischen Bild und zum Draufsicht-Bild.

7. Detektor nach Anspruch 2, bei welchem das Bildverarbeitungsgerät (20) konfiguriert ist zur Schätzung der Annährungsrichtung des Bewegtobjekts durch Projektion des binären, zylindrischen Bildes in eine y-Richtung zur Berechnung der Schwerpunkt-Koordinaten und Berechnung der Annährungsrichtung des Bewegtobjekts aus den berechneten Schwerpunkt-Koordinaten.

8. Detektor nach Anspruch 2, bei welchem das Bildverarbeitungsgerät (20) konfiguriert ist zur Schätzung der Bewegungsbahn durch Rotation des binären Draufsicht-Bildes unter Verwendung der Annäherungsrichtung und Korrektur der Rotation des binären Draufsicht-Bildes in der Weise, dass das Bewegtobjekt stets in eine vorbestimmte Richtung zeigt, Markierung des rotationskorngierten binären Draufsicht-Bildes zur Berechnung einer Fußkandidaten-Region, Schätzung eines Abstands von einer Fußregion anhand eines gewichteten Mittels eines Bereichs der Fußkandidaten-Region, und Berechnung einer Fußposition für jede Aufnahme auf der Grundlage der Annäherungsrichtung und des Abstandes von der Fußregion.

9. System, Folgendes beinhaltend:

eine elektronische Ausrüstung, konfiguriert zur Bedienung durch einen Benutzer; und
den Bewegtobjektdetektor nach einem der vorhergehenden Ansprüche, montiert an der elektronischen Ausrüstung.

10. System nach Anspruch 9, bei welchem das Bildeingabegerät (10) konfiguriert ist, um ein Bild des Benutzers einzufangen.

**Revendications**

1. Détecteur d'objet en mouvement (100) comprenant :

un dispositif d'entrée d'image (10) configuré de manière à capturer un objet en mouvement qui existe à une distance proche de manière à acquérir une information d'image de l'objet en mouvement ;
un dispositif de traitement d'image (20) configuré de manière à appliquer un traitement arithmétique à l'information d'image de manière à générer une image binaire cylindrique et une image binaire de vue de dessus, en extrayant, à partir de chaque image prise parmi une image cylindrique et une image de vue de dessus qui sont dérivées à partir de l'information d'image, une région respective de l'objet en mouvement au moyen d'une corrélation de fond ; de manière à estimer une direction d'approche de l'objet en mouvement à partir de l'image binaire cylindrique ; et de manière à estimer une trajectoire de mouvement de l'objet en mouvement sur la base de la direction d'approche et de l'image binaire de vue de dessus.

2. Détecteur selon la revendication 1, dans lequel le dispositif de traitement d'image (20) inclut :

un générateur d'image binaire cylindrique (21) configuré de manière à générer une image cylindrique à partir de l'information d'image qui est acquise au moyen du dispositif d'entrée d'image (10) et de manière à générer une image binaire cylindrique sur la base de l'image cylindrique ;
un générateur d'image binaire de vue de dessus (22) configuré de manière à générer une image de vue de dessus à partir de l'information d'image qui est acquise au moyen du dispositif d'entrée d'image (10) et de manière à générer une image binaire de vue de dessus sur la base de l'image de vue de dessus ;
un détecteur de direction d'approche (23) configuré de manière à détecter la direction d'approche à partir de l'image binaire cylindrique ; et
un estimateur de trajectoire de mouvement (24) configuré de manière à estimer la trajectoire de mouvement à partir de la direction d'approche et de l'image binaire de vue de dessus.

3. Détecteur selon l'une quelconque des revendications 1 et 2, dans lequel le dispositif d'entrée d'image (10) est une caméra en oeil de poisson.

4. Détecteur selon l'une quelconque des revendications 2 et 3, configuré de manière à générer l'image cylindrique en développant, sur une surface plane virtuelle, l'information d'image obtenue au moyen de la capture d'un objet qui existe sur une surface cylindrique virtuelle à l'aide du dispositif d'entrée d'image (10).

5. Détecteur selon l'une quelconque des revendications 2 à 4, configuré de manière à générer l'image de vue de dessus en appliquant une conversion de point de vue à l'information d'image acquise au moyen du dispositif d'entrée d'image (10).

6. Détecteur selon la revendication 2, dans lequel le dispositif de traitement d'image (20) est configuré de manière à générer l'image binaire cylindrique et l'image binaire de vue de dessus au moyen de la génération d'une image de différence à partir d'un fond sur la base d'une corrélation de fond en utilisant une image de bord et au moyen d'une extraction de seulement une région d'objet en mouvement en utilisant un procédé de binarisation d'Otsu à deux niveaux qui considère une composante de bruit, sur l'image cylindrique et sur l'image de vue de dessus, de manière indépendante l'une de l'autre.

7. Détecteur selon la revendication 2, dans lequel le dispositif de traitement d'image (20) est configuré de manière à estimer la direction d'approche de l'objet en mouvement au moyen d'une projection de l'image binaire cylindrique dans une direction y de manière à calculer le centre de coordonnées de gravité et au moyen d'un calcul de la direction d'approche de l'objet en mouvement à partir du centre calculé de coordonnées de gravité.

8. Détecteur selon la revendication 2, dans lequel le dispositif de traitement d'image (20) est configuré de manière à estimer la trajectoire de mouvement au moyen d'une rotation de l'image binaire de vue de dessus en utilisant la direction d'approche et au moyen d'une correction de la rotation de l'image binaire de vue de dessus de telle sorte que l'objet en mouvement fasse toujours face à une direction prédéterminée, en étiquetant l'image binaire de vue de dessus à rotation corrigée de manière à calculer une région de candidat de pied, au moyen d'une estimation d'une distance par rapport à une région de pied au moyen d'une moyenne pondérée d'une aire de la région de candidat de pied, et au moyen du calcul d'une position de pied pour chaque image de prise de vue sur la base de la direction d'approche et de la distance par rapport à la région de pied.

9. Système comprenant :

un équipement électronique configuré de manière à être actionné par un utilisateur ; et
le détecteur d'objet en mouvement selon l'une quelconque des revendications précédentes qui est monté sur l'équipement électronique.

10. Système selon la revendication 9, dans lequel le dispositif d'entrée d'image (10) est configuré de manière à capturer une image de l'utilisateur.

FIG.1

100

Image input device → Image processing device

10 / 20 /

FIG.2

20

21 — Cylindrical image generation device → 23 — Approaching direction detection device

22 — Top view image generation device → Motion trajectory detection device — 24

# FIG.3A

Viewpoint
conversion

Virtual camera

Camera

Floor/ground surface

# FIG.3B

Virtual cylindrical surface

Virtual flat surface

Camera

Development

# FIG.4

```
                    ┌─────────────┐
                    │    Start    │
                    └─────────────┘
                           │
                           ▼
        ┌──────────────────────────────────────┐     S401
        │ Calculate difference between target   │
        │ pixel and peripheral pixels for each  │
        │ pixel of coordinate-converted image   │
        │ of current frame                      │
        └──────────────────────────────────────┘
                           │
                           ▼                          S402
              ◇ Is current frame first frame? ◇
         No  ◇                                ◇
              Yes
                           │                          S403
                           ▼
        ┌──────────────────────────────────────┐
        │ Set peripheral difference image of    │
        │ the current frame to background image │
        └──────────────────────────────────────┘
                           │                          S404
                           ▼
        ┌──────────────────────────────────────┐
        │    Update background image by weight  │
        └──────────────────────────────────────┘
                           │                          S405
                           ▼
        ┌──────────────────────────────────────┐
        │ Calculate correlation value between   │
        │ peripheral difference image of current│
        │ frame and background image in         │
        │ peripheral region                     │
        └──────────────────────────────────────┘
                           │                          S406
                           ▼
        ┌──────────────────────────────────────┐
        │ Calculate histogram Hist1 of          │
        │ correlation value over entire image   │
        └──────────────────────────────────────┘
                           │                          S407
                           ▼
        ┌──────────────────────────────────────┐
        │ Add 1 as noise to each bin of         │
        │ histogram Hist1 to calculate Hist2.   │
        └──────────────────────────────────────┘
                           │                          S408
                           ▼
        ┌──────────────────────────────────────┐
        │ Calculate thresholds T1 and T2 from   │
        │ Histograms Hist1 and Hist2,           │
        │ respectively, according to Otsu's     │
        │ binarization method                   │
        └──────────────────────────────────────┘
                           │                          S409
                           ▼
        ┌──────────────────────────────────────┐
        │   Calculate ratio between T1 and T2   │
        └──────────────────────────────────────┘
                           │                          S410
                           ▼
              ◇ Is equal to or more      ◇
        Yes   ◇    than threshold Tr?    ◇
                           │ No                       S411
                           ▼
        ┌──────────────────────────────────────┐
        │        Set threshold T to T1          │
        └──────────────────────────────────────┘
                           │                          S412
                           ▼
        ┌──────────────────────────────────────┐
        │        Set threshold T to T2          │
        └──────────────────────────────────────┘
                           │
                           ▼
        ┌──────────────────────────────────────┐
        │ Binarize correlation value using      │
        │ binarization threshold T              │
        └──────────────────────────────────────┘
                           │
                           ▼
                    ┌─────────────┐                   S413
                    │     End     │
                    └─────────────┘
```

# FIG.5

```
                        ┌─────────────┐
                        │    Start     │
                        └──────┬──────┘
                               │
                               ▼                    S501
                    ┌──────────────────────┐
                    │ Input cylindrical binary │
                    │         image          │
                    └──────────┬───────────┘
                               │
                               ▼                    S502
                    ┌──────────────────────┐
                    │ Calculate histogram P of binary │
                    │  image for each x-coordinate  │
                    └──────────┬───────────┘
                               │
                               ▼                    S503
                    ┌──────────────────────┐
                    │ Calculate maximum coordinate │
                    │    xmax of P(x) and store    │
                    │  maximum value Pmax thereof  │
                    └──────────┬───────────┘
                               │
                               ▼                    S504
                         ◇─────────────◇
                    ◇ Is Pmax is equal to or ◇ ──── No
                    ◇  more than threshold?  ◇
                         ◇─────────────◇
                               │ Yes
                               ▼                    S505
                    ┌──────────────────────┐
                    │ Calculate barycenter Xgravity near │
                    │  maximum coordinate xmax  │
                    └──────────┬───────────┘
                               │
                               ▼                    S506
                    ┌──────────────────────┐
                    │ Calculate approaching direction │
                    │   from barycenter Xgravity and   │
                    │ conversion coefficient A[dig/pix] │
                    └──────────┬───────────┘
                               │
```

Is $P_{max}$ is equal to or more than threshold?

Calculate barycenter $X_{gravity}$ near maximum coordinate xmax

Calculate approaching direction from barycenter $X_{gravity}$ and conversion coefficient A[dig/pix]

It is determined that there is no moving object

# FIG.6

Start

S601 — Is there moving object on cylindrical image?

No

Yes

S602 — Rotate top view binary image such that approaching direction faces front

S603 — Set center line to black (0) on binary image after rotation and divide moving object into left and right sections with respect to center line

S604 — Perform labeling for top view binary image after rotation and calculate area s and lower end coordinate y for each region

S605 — Set region having area equal to or larger than threshold as foot candidate position

S606 — Is number of foot candidates is equal to or more than 1?

Yes

No

S607 — Calculate foot distance L by area-weighted mean, with area of each of foot candidate positions set as "si" and lower end coordinate thereof as "yi"

S608 — Calculate distance z in real world from foot distance L on top view image and conversion coefficient a[m/pixel]

S609 — Calculate temporary foot position from approaching direction  and distance z

S610 — Use weight  to update foot position (X, Y) of current frame from foot position (Xprev, Yprev) one frame before current frame and temporary foot position

S611 — Add (X, Y) as current coordinates to trajectory list

S612 — Add "no coordinate" to trajectory list

End

15

FIG.7A                    FIG.7B

FIG.8B

FIG.8D

FIG.8F

FIG.8H

FIG.8J

FIG.8L

FIG.8C

FIG.8E

FIG.8G

FIG.8A

FIG.8I

FIG.8K

FIG.8M

**EP 2 858 037 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8284258 B
- EP 1197937 A
- JP 2010217984 A
- JP 2012141972 A